# EUROPÄISCHE PATENTSCHRIFT

(11) **EP 0 771 485 B1**
(45) Veröffentlichungstag und Bekanntmachung des Hinweises auf die Patenterteilung: **04.02.1998**
(21) Anmeldenummer: 95924283.5
(22) Anmeldetag: 19.06.1995
(51) Int. Cl.: H02G 1/00, A44B 19/28

(54) **VORRICHTUNG ZUM VERSCHLIESSEN VON UMHÜLLUNGEN WIE KABELSCHLÄUCHE**
DEVICE FOR CLOSING SHEATHINGS SUCH AS CABLE CONDUITS
DISPOSITIF DE FERMETURE D'ENVELOPPES TELLES QUE DES GAINES DE CABLES

(30) Priorität: 16.07.1994 DE 4425257; 31.05.1995 DE 19519849
(43) Veröffentlichungstag der Anmeldung: 07.05.1997
(73) Patentinhaber: Krauss, Erich, 68535 Neckarhausen (DE)
(72) Erfinder: Krauss, Erich, 68535 Neckarhausen (DE)
(74) Vertreter: Sartorius, Peter, Dipl.-Ing.
(86) Internationale Anmeldenummer: EP9502368
(87) Internationale Veröffentlichungsnummer: WO9602967

(56) Entgegenhaltungen:
- DE-B- 1 046 539
- US-A- 3 650 009
- US-A- 4 891 256

## Beschreibung

Die Erfindung bezieht sich auf eine Vorrichtung zum Verschließen von Umhüllungen wie Kabelschläuche, flexible Rohrleitungen oder Behälterelemente mittels einer an einem Werkzeug vorgesehenen Verschlußeinrichtung, bei der an zwei gegenüberliegenden Randteilen der Umhüllung über einen am Werkzeug angeordneten Schieber Schließelemente wechselseitig ineinander- und beim Öffnen auseinandergehakt beziehungsweise getrennt werden.

Eine gattungsgemäße Vorrichtung ist in der US-A-4 891 256 beschrieben.

Es ist bereits allgemein ein Werkzeug zum Verschließen von Reißverschlüssen bekannt, das für Reißverschlüsse von Kabelschläuchen eingesetzt wird und hierzu einen Schieber aufweist, der die beiden gegenüberliegenden Schließelemente ineinanderfügt beziehungsweise sie auch wieder auseinandernimmt, falls dies gewünscht wird. Derart zusammengefügte Schließelemente sind jedoch ungesichert und können somit leicht wieder geöffnet werden, auch dann, wenn dies nicht beabsichtigt ist, insbesondere wenn auf die Schließelemente Zug ausgeübt wird.

Ferner ist ein Schraubenfederreißverschluß aus Kunststoff zum Verschließen von Schlitzen in Bettbezügen beziehungsweise Kissenbezügen (DE PS 10 46 539) bekannt, bei dem die Kuppelendstelle nach dem Aufnehmen des Schiebers vom gekuppelten Verschluß durch eine abnehmbare, beide Tragbänder verbindende und in diese einsteckbare Verbindungsklammer gegen Aufreißen verriegelbar ist. Die Montage eines derartigen Reißverschlusses für Kabelschläuche ist sehr zeitaufwendig, da das Verschlußelenent für den Reißverschluß mit dem zugehörigen Schieber lediglich von Hand aus betätigbar ist. Daher benötigt man sehr viel Zeit, um Kabelschläuche mit einem derartigen Schieber zu verschließen. Da die in den Kabelschläuchen eingelegten Kabel auf die Kabelwand einen relativ großen Druck ausüben, ist darüber hinaus ein sehr großer Kraftaufwand erforderlich, so daß sich der Schließmechanismus nur sehr schwer und in manchen Fällen überhaupt nicht bewegen läßt.

Demgegenüber liegt der Erfindung die Aufgabe zugrunde, die Vorrichtung zum Verschließen von Umhüllungen, wie Kabelschläuche, derart auszubilden und anzuordnen, daß mit einem einzigen Werkzeug die Schließelemente leicht und sehr schnell zusammengefügt und auch gesichert werden können.

Gelöst wird die Aufgabe erfindungsgemäß dadurch, daß an einem Werkzeug zur Aufnahme des Schiebers eine weitere Einrichtung zum Sichern der zusammengefügten Schließ-elemente beziehungsweise Verbindungselemente vorgesehen ist, die jeweils unabhängig von der Stellung des Schiebers aktivierbar ist. Durch die vorteilhafte Ausbildung und Anordnung des Werkzeugs können die Schließelemente, beispielsweise eines Reißverschlusses, ohne weiteres in einem einzigen Arbeitsgang zusammengefügt und mittels des gleichen Werkzeugs gesichert werden, so daß bei auf die Schließelemente einwirkenden Zugkräften ein Öffnen der Schließelemente nicht möglich ist. Hierdurch kann also das Arbeitsverfahren zum Schließen von Reißver schlüssen an Kabelschläuchen wesentlich verbilligt werden.

Hierzu ist es vorteilhaft, daß die Einrichtung zum Sichern der zusammengefügten Schließelemente im Bereich des Schiebers vorgesehen ist. Da die Vorrichtung zum Sichern der zusammengefügten Schließelemente relativ dicht am Schieber vorgesehen ist, wird verhindert, daß sich die durch den Schieber zusammengefügten Schließ-elemente wieder selbständig öffnen, wenn hierzu das Sicherungselement an den Schließelementen eingesetzt ist.

Eine zusätzliche Möglichkeit ist gemäß einer Weiterbildung der erfindungsgemäßen Vorrichtung, daß die Einrichtung zum Sichern der zusammengefügten Schließelemente beziehungsweise eines Reißverschlusses mit Bezug auf die Bewegungsrichtung des Schiebers vor oder hinter dem Schieber vorgesehen ist.

In weiterer Ausgestaltung der Erfindung ist es vorteilhaft, daß die Einrichtung aus einem am Werkzeug geführten Stempel und einem mit diesem zusammenwirkenden Amboß oder einer Matrize gebildet ist, die über ein Stellelement aktivierbar ist. Mittels des Stempels und des mit dem Stempel zusammenwirkenden Ambosses lassen sich auf sehr kostengünstige Weise Klammern in den Reißverschluß einsetzen, die die zusammengefügten Schließelemente des Reißverschlusses gegen Trennen sichern.

Gemäß einer bevorzugten Ausführungsform der erfindungsgemäßen Lösung ist schließlich vorgesehen, daß die Einrichtung zum Sichern der zusammengefügten Schließelemente aus einem am Werkzeug geführten Stempel und einem mit diesem zusammenwirkenden Amboß oder einer Matrize gebildet ist, wobei die Einrichtung über ein Stellelement aktivierbar ist, das mit einem Geber zusammenwirkt, der nach Zurücklegen einer bestimmten Wegstrecke des Werkzeugs einen Stellimpuls auslöst und ein Verstellen des Stempels bewirkt. Durch Verwendung eines im Bereich des Stempels vorgesehenen Gebers kann automatisch ein Stellimpuls über den Geber ausgelöst werden.

Von besonderer Bedeutung ist für die vorliegende Erfindung, daß die Einrichtung zum Sichern der zusammengefügten Schließelemente eines Reißverschlusses mit einer hydraulischen, pneumatischen oder elektrischen Stellvorrichtung in Wirkverbindung steht, die mit dem Stellelement und/oder dem Stempel in Wirkverbindung steht. Mittels der hydraulischen oder pneumatischen beziehungsweise auch der elektrischen Stellvorrichtung läßt sich die Einrichtung zum Sichern der Schließelemente optimal einsetzen und auch über einen externen Geber aktivieren, wenn das Werkzeug eine bestimmte Wegstrecke zurückgelegt hat und beispielsweise an einem Knotenpunkt angekommen ist, in dessen Bereich der Reißverschluß beziehungsweise die zugehörigen Schließelemente gesichert werden sollen. Hierdurch ist es auch möglich, die Einrichtung zum Sichern immer dann automatisch einzusetzen, wenn eine bestimmte Position am Reißverschluß erreicht ist.

Im Zusammenhang mit der erfindungsgemäßen Ausbildung und Anordnung ist es von Vorteil, daß die Einrichtung zum Sichern der zusammengefügten Schließelemente aus einem hydraulischen oder pneumatischen Stellzylinder besteht, der mit einer Auslösevorrichtung des Stempels wirkungsmäßig verbunden ist.

Vorteilhaft ist es ferner, daß der Verschlußeinrichtung und/oder der Einrichtung zum Sichern der zusammengefügten Schließelemente eine Meßvorrichtung zugeordnet ist, die mit einem Rechner zusammenschließbar ist, und daß die Meßvorrichtung aus einem Meßrad oder einem Impulsgeber besteht, der eine durch das Werkzeug zurückgelegte Wegstrecke erfaßt und bei einer bestimmten Stelle eine Stellinformation an den Geber weiterleitet, der ein Verstellen des Stempels bewirkt. Durch die Verwendung einer Meßvorrichtung, die in vorteilhafter Weise im Bereich der Verschlußeinrichtung vorgesehen ist, läßt sich die Wegstrecke zwischen zwei bestimmten Punkten beziehungsweise Anschlußstellen von Kabelschläuchen auf kostengünstige Weise ermitteln und dadurch die Möglichkeit schaffen, automatisch eine Sicherung von zwei ineinandergefügten Schließelementen zu erreichen, wenn eine bestimmte Wegstrecke zurückgelegt ist beziehungsweise ein entsprechender Knotenpunkt über das Werkzeug angesteuert wurde, so daß dann der Geber aufgrund eines entsprechenden Impulses die Verschlußeinrichtung aktiviert.

Hierzu ist es vorteilhaft, daß die Meßvorrichtung, die Verschlußeinrichtung und die Einrichtung zum Sichern der zusammengefügten Schließelemente in einer Baueinheit zusammengefaßt sind. Durch Zusammenfassen aller Bauteile in einem einzigen Werkzeug erhält man eine leicht zu handhabende Vorrichtung, mit der alle wichtigen Funktionen ausgeübt werden können, um Kabelschläuche mit einer Ummantelung zu versehen und zu sichern.

Hierzu ist es ferner vorteilhaft, daß die Meßvorrichtung, die Verschlußeinrichtung und die Einrichtung zum Sichern der zusammengefügten Schließelemente in einem elektrischen Modul zusammengefaßt sind, wobei die Meßvorrichtung, die Verschlußeinrichtung und die Einrichtung zum Sichern der zusammengefügten Schließelemente mit einer elektrischen Steuervorrichtung in Wirkverbindung stehen.

In weiterer Ausgestaltung der Erfindung ist es vorteilhaft, daß zu der Steuervorrichtung der Rechner gehört, über dessen in der Datenbank abgelegtes Steuerprogramm die Einrichtung zum Sichern der zusammengefügten Schließelemente in Abhängigkeit einer zurückgelegten Wegstrecke des Werkzeugs steuerbar ist, und daß das Werkzeug mit einer Einrichtung zur Erfassung verschiedener Daten über einen Kabelsatz ausgerüstet ist, die mit einer Stromversorgungseinrichtung in Verbindung steht.

Vorteilhaft ist es außerdem, daß das Werkzeug mit einer akustischen und/oder optischen Anzeigevorrichtung beziehungsweise einem Display ausgestattet ist. Durch die Verwendung des Rechners lassen sich alle in der Produktion einsetzbaren Kabelsätze erfassen und entsprechend den Kundenwünschen auch so gestalten, daß sie für ganz bestimmte Kraftfahrzeugtypen individuell einsetzbar sind. Damit wird die Möglichkeit geschaffen, der Bedienungsperson des Werkzeugs alle wichtigen Informationen zur Verfügung zu stellen, so daß diese lediglich das Werkzeug durch den Reißverschluß ziehen muß, um die einzelnen Schließelemente miteinander zu verbinden und im Bereich einer Knotenstelle zweier zusammengefügter Kabelschläuche zu sichern. Es ist also nicht mehr notwendig, vor Einsatz des Arbeitswerkzeugs aufwendige Meßarbeiten durchzuführen, um an einer gewünschten Stelle das Sicherungselement einzusetzen. Durch die Erfassung aller wesentlichen Daten eines Kabelsatzes läßt sich das Werkzeug vollautomatisch einsetzen, so daß auf die bisher üblichen Vorbereitungen verzichtet werden kann. Insbesondere kann auf das sehr aufwendige Layout und die Festlegung einzelner Knotenpunkte auf einem Meß- oder Montagetisch für die Erstellung eines Kabelsatzes in der bisherigen Form verzichtet werden, da, wie erwähnt, die bisher üblichen Meßarbeiten entfallen können.

Hierzu ist es vorteilhaft, daß das Werkzeug eine Entriegelungsvorrichtung aufweist, die über den Geber ansteuerbar ist und Schließelemente dann löst, wenn in einen erstellten Kabelstrang eine weitere Abzweigung eingefügt beziehungsweise an die Hauptkabelabzweigung angeschlossen werden soll, und daß das Werkzeug mit mehreren Einrichtungen zum Sichern der Klammern ausgestattet ist.

Ferner ist es möglich, daß der Amboß an seinen beiden sich gegenüberliegenden Enden mit einer Rundung versehen sein kann, die durch den Radius = R bestimmt wird, der halb so groß ist wie die Dicke = D des Ambosses.

In weiterer Ausgestaltung der Erfindung ist es vorteilhaft, daß der Radius R eine Größe zwischen 1 und 50 mm aufweist. Durch die vorteilhafte Ausgestaltung der einzelnen Schließelemente, die entweder als Paß-Elemente oder als Nut- und Federelemente ausgebildet sein können, erhält man mittels des Werkzeugs, das die einzelnen Schließelemente zusammenfügt, einen sehr reißfesten Kabelschlauch, der sich auch bei großer Druckbelastung nicht weiter öffnen läßt. Die Schließelemente lassen sich durch das Werkzeug mit geringem Kraftaufwand in sehr kurzer Zeit zusammenfügen und durch die Verwendung der Meßorgane wird nur soviel Kabelschlauch verschlossen, wie für eine bestimmte Wegstrecke erforderlich ist. Auch wenn sich derartige Kabelschläuche aufgrund der einzelnen Kabel nicht immer ohne weiteres verschließen lassen, wird die Verschließarbeit durch das eingesetzte Werkzeug wesentlich erleichtert.

Hierzu ist es vorteilhaft, daß die nach dieser Vorrichtung hergestellte Umhüllung beziehungsweise der Kabelschlauch als Schließelemente einen Reißverschluß mit ineinandergreifenden Zähnen oder zusammenfügbaren Nut- und Federelementen oder verkleb- beziehungsweise verschweißbaren, gegeneinander anlegbaren Verbindungselementen aufweist und daß die Paßfeder als Haken ausgebildet ist, der in die Nut einfügbar ist.

Es ist auch möglich, daß die gegenüberliegenden Verbindungselemente des Schließelements über ein Klebemittel miteinander verbindbar sind und daß die gegenüberliegenden Verbindungselemente des Schließelements thermisch miteinander verbindbar sind.

Ferner ist es vorteilhaft, daß die gegenüberliegenden Verbindungselemente gegeneinander zur Anlage bringbare Flächen aufweisen, auf die das Klebemittel aufbringbar ist und daß die gegenüberliegenden Verbindungselemente an ihren gegenüberliegenden Flächen derart behandelt werden, daß sie miteinander eine feste Verbindung eingehen.

In weiterer Ausgestaltung der Erfindung ist es vorteilhaft, daß die Umhüllung zur Veränderung ihres Querschnittes Dehnungselemente aufweist.

Hierzu ist es vorteilhaft, daß mittels des Werkzeugs zuerst die Schließelemente zusammengefügt und mittels einer Einrichtung zum Sichern der zusammengefügten Schließelemente fest verbunden werden, wobei im Bereich des Kabelknotenpunkts ein, zwei oder mehrere Schließ-elemente in den Kabelschlauch einsetzbar sein können, und daß in einer Datenbank verschiedene Abmessungen von Kabelschlauchanordnungen und von verschiedenen Abzweigungen oder separaten Strängen und/oder die Wegstrecken zwischen zwei Knotenpunkten von Kabelschlauchanordnungen abgelegt sind, die der Steuervorrichtung des Werkzeugs zur Verfügung gestellt werden können.

Ein vorteilhaftes Verfahren erhält man durch folgende Verfahrensschritte:
a) Eingabe der Schlüsselnummer eines bestimmten Wagentyps gemäß Kundenwunsch in die Datenbank,
b) Auswahl des Kabelsatzes gemäß Wagentyp und Kundenwunsch,
c) Festlegen der Reihenfolge der zu montierenden Fahrzeuge in einer bestimmten Reihenfolge 1 bis n,
d) Schließen des Reißverschlusses mittels des Werkeugs,
e) Ermitteln der Wegstrecke zwischen zwei Knotenpunkten des Kabelsatzes,
f) Sichern der Schließelemente des Reißverschlusses mittels der Einrichtung.

Ein vorteilhaftes Verfahren erreicht man auch durch folgende Verfahrensschritte:
a) Eingabe der Schlüsselnummer eines bestimmten Wagentyps gemäß Kundenwunsch in die Datenbank,
b) Auswahl des Kabelsatzes gemäß Wagentyp und Kundenwunsch,
c) Festlegen der Reihenfolge der zu montierenden Fahrzeuge in einer bestimmten Reihenfolge 1 bis n,
d) Erstellen einer Zeichnung des Kabelsatzes und Wiedergabe auf einem Display,
e) Schließen des Reißverschlusses mittels des Werkzeugs,
f) Ermitteln der Wegstrecke zwischen zwei Knotenpunkten des Kabelsatzes,
g) Sichern der Schließelemente des Reißverschlusses mittels der Einrichtung.

Ferner ist es vorteilhaft, daß die in der Datenbank abgelegten Informationen über einen Kabelsatz für einen bestimmten Wagentyp graphisch aufbereitet und auf einem Bildschirm sichtbar und/oder als Zeichnung ausgedruckt und nach Eingabe einer bestimmten Kennummer eines Wagentyps mit Festlegen der einzelnen Abstände zwischen zwei Knotenpunkten graphisch aufbereitet einer Produktionsplanung zur Verfügung gestellt werden.

Außerdem ist es vorteilhaft, daß die über das Werkzeug zusammengefügten Schließelemente im Bereich eines Knotenpunkts vor und/oder nach einem Knotenpunkt und/oder im Bereich eines Schließelements über ein Befestigungselement oder eine Klammer gesichert werden, die mittels der Einrichtung zwischen jeweils zwei gegenüberliegenden Schließelementen eingesetzt werden.

Weitere Vorteile und Einzelheiten der Erfindung sind in den Patentansprüchen und in der Beschreibung erläutert und in den Figuren dargestellt.
- Figur 1: eine schematische Darstellung des Werkzeugs mit einer Verschlußeinrichtung und einer Einrichtung zum Sichern der zusammengefügten Schließelemente mittels eines Auslösers,
- Figur 2: eine Draufsicht gemäß Figur 1,
- Figur 3: eine Schnittdarstellung entlang der Linie C-D gemäß Figur 1,
- Figur 4: eine Schnittdarstellung entlang der Linie A-B gemäß Figur 1,
- Figur 5a + 5b: eine Teilansicht eines Reißverschlusses mit dem zugehörigen Schieber zum Verschließen der einzelnen Schließelemente,
- Figur 6: ein weiteres Ausführungsbeispiel eines Werkzeugs mit einer pneumatischen Stellvorrichtung,
- Figur 7: verschiedene Kabel, die zu einem Kabelsatz zusammengesetzt sind und mittels eines Kabelschlauchs umhüllt sind,
- Figur 8+9: zwei verschiedene Funktionsabläufe für das Erstellen eines Kabelsatzes sowie dessen Ummantelung,
- Figur 10: eine Einrichtung zum Sichern der zusammengefügten Schließelemente mit einem Kabelschlauch im Schnitt vor dem Arbeitseinsatz des zugehörigen Stempels,
- Figur 11: ein Befestigungselement beziehungsweise eine Klammer, die durch den Stempel der Einrichtung zum Sichern der zusammengefügten Schließelemente in den Reißverschluß eingefügt wurde,
- Figur 12: eine perspektivische Darstellung des Werkzeugs zum Verschließen von Umhüllungen beziehungsweise Kabelschläuchen wie flexible Rohrleitungen oder Behälterelemente mit zwei gegenüber liegend angeordneten beweglichen Werkzeugteilen, die die Schließelemente zusammenfügen,
- Figur 13: Darstellung eines Kabelschlauchs ähnlich wie Figur 14, wobei lediglich in dem oberen Raum eine Klebemasse eingebracht ist,
- Figur 14: ein weiteres Ausführungsbeispiel eines Kabelschlauchs mit Verschließelementen, die zusammengefügt sind und in deren Hohlräume eine Klebemasse einbringbar ist,
- Figur 15: ein weiteres Arbeitswerkzeug mit einem Schweißtrafo,
- Figur 16: ein weiteres Arbeitswerkzeug mit einem Klebstofftank.

In der Zeichnung ist mit 24 ein Werkzeug bezeichnet, das als Vorrichtung zum Verschließen von Umhüllungen, wie Kabelschläuche 23, flexiblen Rohrleitungen oder Behälterelementen dient.

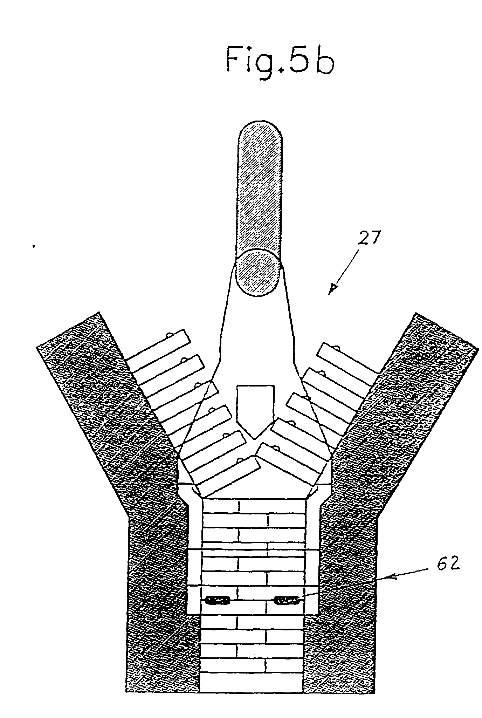

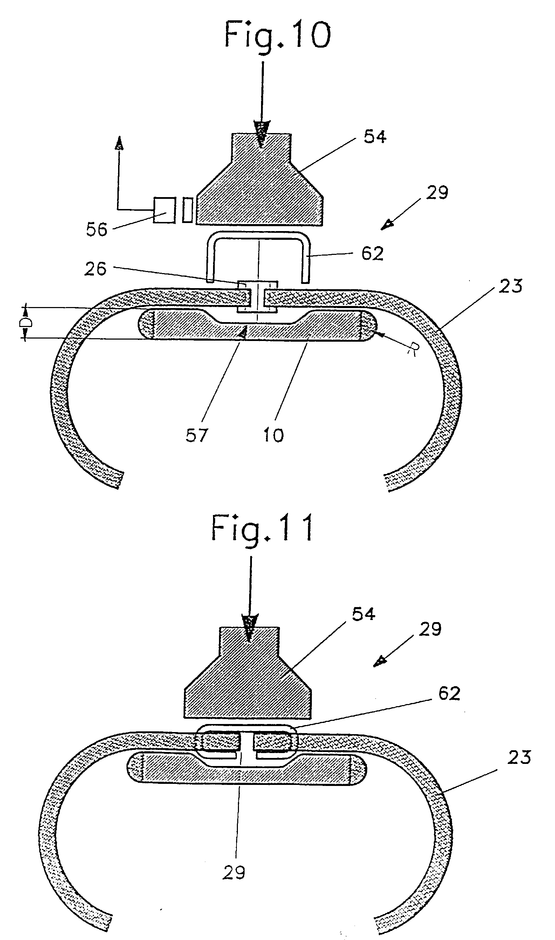

Das Werkzeug 24 besteht aus einem feststehenden Haltegriff 1 und einem mit dem Haltegriff 1 gelenkig verbundenen Griff 2, der über einen Gelenkbolzen 15 mit dem Haltegriff 1 schwenkbar verbunden ist. Der Haltegriff 1 weist ein Gehäuseteil 22 zur Aufnahme eines Displays 17 zur Wiedergabe von Zeichnungsteilen beziehungsweise Dateninformationen, eine Einrichtung 29 zum Sichern zusammengefügter Schließelemente 26 eines in Figur 5 dargestellten Reißverschlusses 57 auf. Ferner ist im Gehäuseteil 22 ein Magazin 33 zur Aufnahme der Schließ-elemente 26 vorgesehen. Das Magazin 33 ist Bestandteil der Einrichtung zum Sichern der zusammengefügten Schließelemente 26. Die einzelnen Schließelemente beziehungsweise Klammern 26, die in dem Magazin 33 aufgenommen sind, werden mittels einer Spanneinrichtung 4 und einer in der Zeichnung nicht dargestellten Feder im Magazin 33 in Richtung der Auslaßöffnung der Einrichtung 29 gedrückt. Die Einrichtung 29, die auch als Tackervorrichtung bezeichnet werden kann, ist über einen Gelenkbolzen 7 in dem Gehäuseteil 22 zwischen einer Ausgangs- und einer Arbeitsstellung gegen die Wirkung einer Feder 6 verschwenkbar aufgenommen. Der Haltegriff 2 weist ferner ein Stellelement 58 auf, das mit einer Auslösevorrichtung 55 in Wirkverbindung steht, so daß bei Betätigung des Stellelements 58 die Einrichtung 29 zum Sichern der zusammengefügten Schließelemente 26 aktiviert wird und dadurch Befestigungselemente beziehungsweise Klammern 62 mittels eines Ambosses beziehungsweise Stempels 54 gemäß Figur 10 und einer mit dem Stempel zusammenwirkenden Matrize 10 in den Reißverschluß 57 eingesetzt werden, so daß die bereits zusammengefügten Schließelemente 26 gegen Lösen gesichert werden können.

Die Befestigungselemente 62 können aus U-förmig ausgebildeten Klammern bestehen, die mit ihren beiden Schenkeln jeweils an der Rückseite der Schließelemente 26 in den Kabelschlauch 23 eingedrückt und dann mittels des Ambosses beziehungsweise der Matrize 10 gemäß Figur 11 umwinkelt werden. Der Amboß 10 kann an seinen beiden sich gegenüberliegenden Enden mit einer Rundung versehen sein, wobei die Rundung durch den Radius = R bestimmt wird, der halb so groß ist wie die Dicke = D des Ambosses, um dadurch den Kabelschlauch 23 vor Beschädigung zu schützen. Der Radius R sollte zumindest zwischen 5 und 50 mm groß sein.

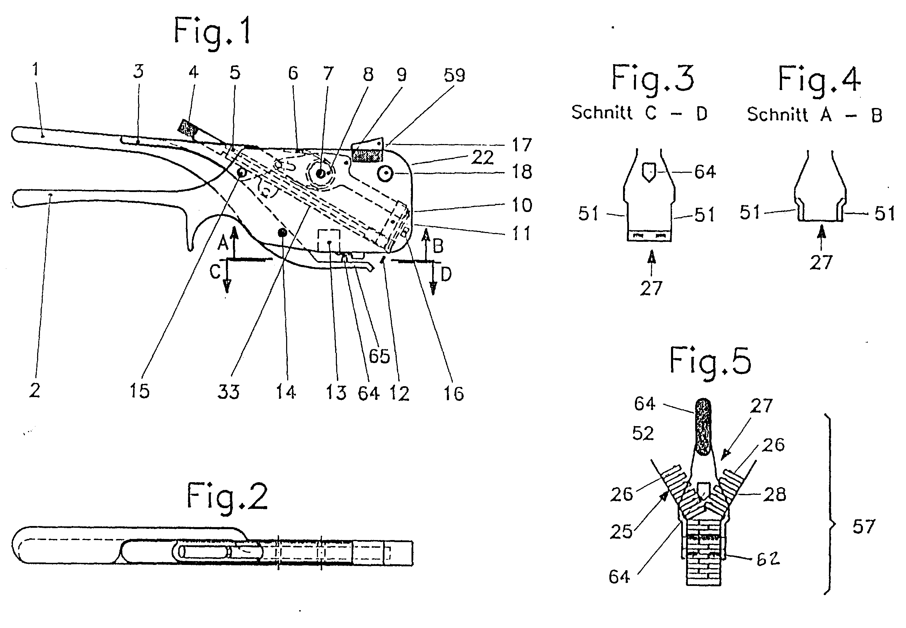

Wie aus Figur 1 hervorgeht, ist an der Unterseite des Gehäuseteils 22 gemäß Figur 3 und 4 ein Schieber 27 vorgesehen, der aus zwei gegenüberliegenden Wänden 51 gebildet ist und aus einem entsprechenden Mittelteil besteht, über das die zusammengefügten Schließelemente 26 wieder auseinandergehakt werden können, wenn der Schieber 27 gemäß Figur 5 nach unten bewegt wird. Wird der Schieber 27 gemäß Figur 5 nach oben bewegt, so werden die einander gegenüberliegenden Schließelemente 26 miteinander verhakt.

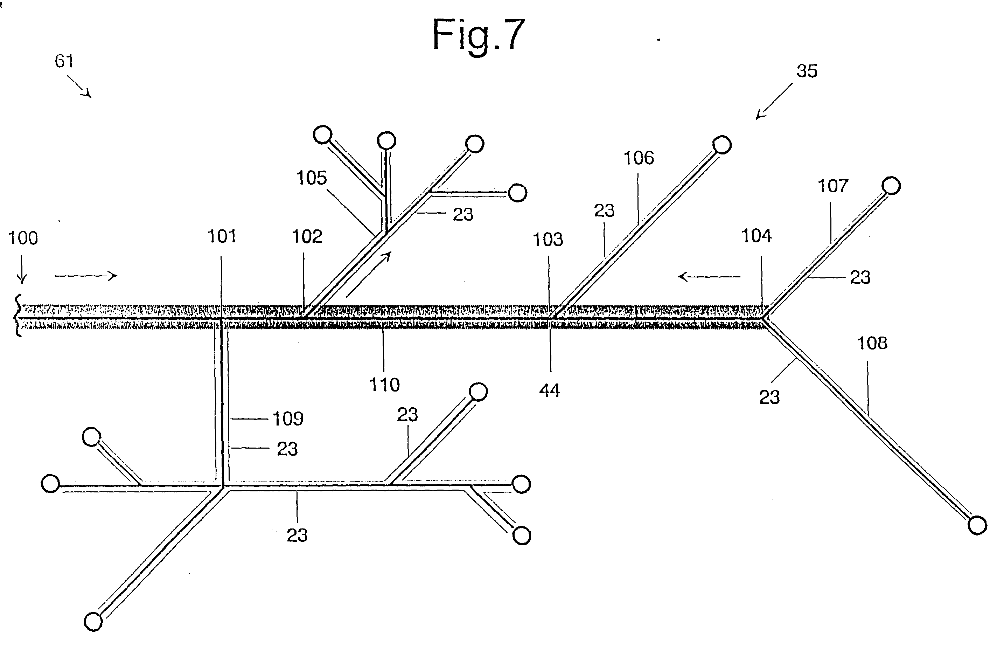

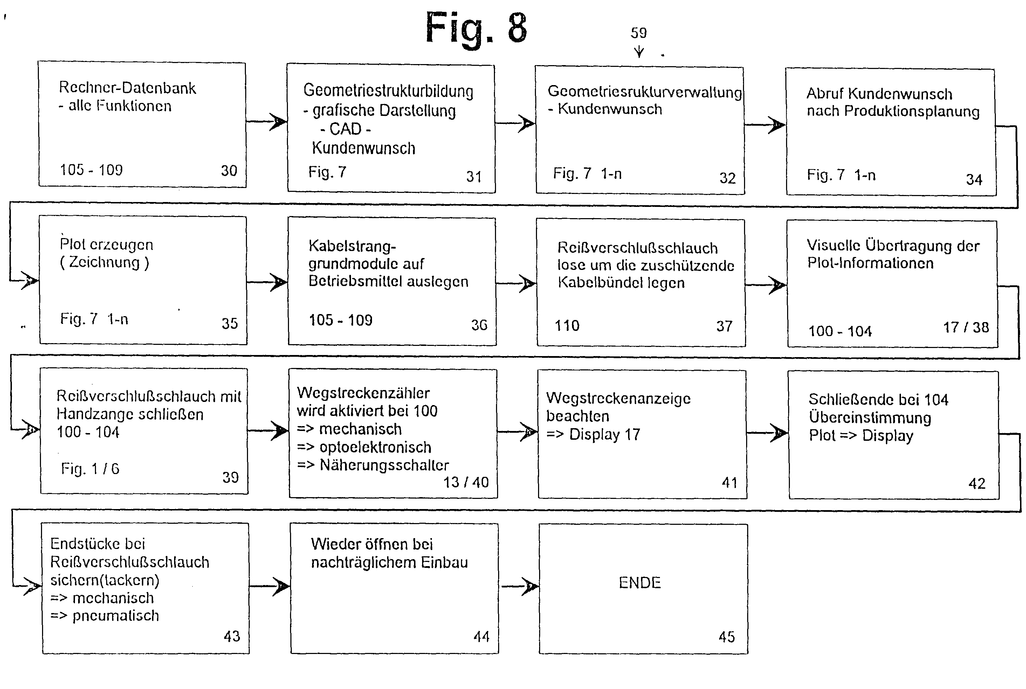

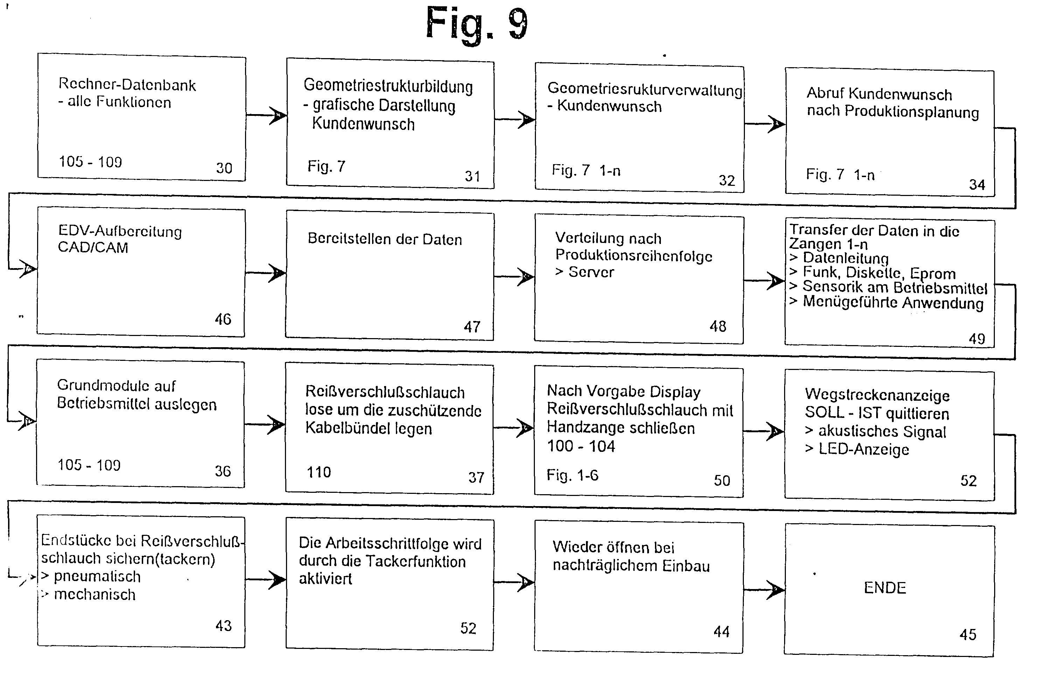

Gemäß Figur 1 wird die Einrichtung 29 mittels der Rückstellfeder 6 nach einem Tacker-Arbeitsvorgang in die in Figur 1 dargestellte Position zurückverstellt und verharrt in dieser Stellung so lange, bis das Stellelement 58 betätigt wird. Die Einrichtung 29 ist hierzu über den Gelenkbolzen 7 im Gehäuseteil 22 schwenkbar aufgenommen. Die Einrichtung 29 steht ferner über einen Gelenkbolzen 63 mit dem Stellelement 58 in Wirkverbindung. Sollen beispielsweise die Schließelemente 26 des Reißverschlusses 57 gemäß Figur 5 zusammengefügt werden, so wird der Schieber 27 nach oben bewegt. Hierzu fährt eine Spreizzunge 64 sowie die Wände 51 des Schiebers 27, der am Haltegriff 1 fest angeordnet ist, durch den Reißverschluß 57, so daß die gegenüberliegenden Wände 51 des Schiebers 27 die jeweils gegenüberliegenden Schließelemente 26 zusammenfügen und miteinander verhaken. Hat beispielsweise der Schieber 27 von einem Kabelsatz einen der gemäß Figur 7 dargestellten Knotenpunkte zwischen 100 und 103 beziehungsweise das Schließende 104 erreicht, so wird das Stellelement 58 betätigt und hierdurch die Einrichtung 29 aktiviert und das entsprechende Schließelement 26 in den Kabelschlauch 23 eingeführt.

In vorteilhafter Weise liegt der Stempel 54 der Einrichtung 29 dicht vor oder hinter dem Schieber 27 beziehungsweise der zugehörigen Spreizzunge 64 zum Öffnen der Schließelemente 26. Mittels der Spreizzunge 64 können, wie bereits erwähnt, die Schließelemente 26 wieder auseinandergehakt werden, wenn der Schieber 27 gemäß Figur 5 nach unten verstellt wird.

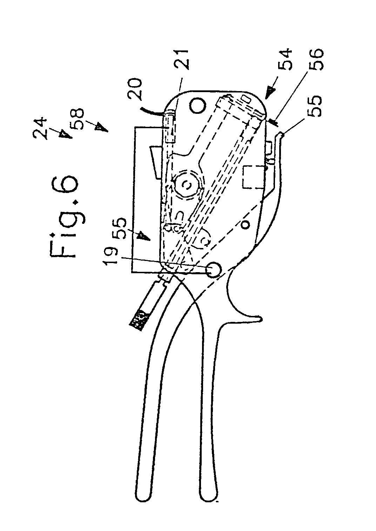

Gemäß Figur 6 kann das Werkzeug 24 beziehungsweise die Einrichtung 29 zum Sichern der zusammengefügten Schließ-elemente 26 des Reißverschlusses 57 mit einer elektrischen, hydraulischen oder pneumatischen Stellvorrichtung beziehungsweise einem Stellzylinder 21 in Wirkverbindung stehen. Soll also die Einrichtung 29 aktiviert werden, so wird hierzu der Stellzylinder 21 über Druckluft beaufschlagt, so daß der pneumatische Stellzylinder mit der zugehörigen Auslösevorrichtung aktiviert und der Stempel 54 gemäß Figur 10 nach unten bewegt wird und dadurch die Befestigungselemente beziehungsweise die Klammern 62 in den Kabelschlauch eingedrückt werden. Ferner ist es möglich, daß dem Stellzylinder oder auch dem Stempel 54 ein elektrischer beziehungsweise optisch ansprechender Geber 56 (Figur 10) zugeordnet ist, der nach Zurücklegen einer bestimmten Wegstrecke des Werkzeugs 24 einen Stellimpuls auslöst, beispielsweise dann, wenn die Knotenpunktstelle 101 erreicht ist und dadurch ein Verstellen des Stempels 54 bewirkt wird.

Es ist auch vorteilhaft, daß der Einrichtung 29 zum Sichern der zusammengefügten Schließelemente 26 eine Meßvorrichtung 13 (Figur 1) beziehungsweise gemäß Figur 8 ein Wegstreckenzähler 40 zugeordnet ist, der den genauen Abstand zwischen zwei Knotenpunkten 101 und 102 beziehungsweise 102 und 103 erfaßt und nach Detektierung dieser Knotenpunkte jeweils dann einen Stellimpuls über den Geber 56 auslöst, wenn eine bestimmte Wegstrecke zurückgelegt ist beziehungsweise der Geber 56 den Knotenpunkt 103 erreicht oder passiert hat. Der Auslösevorgang einer Verschlußeinrichtung 25 beziehungsweise der Einrichtung 29 kann also immer dann angesprochen werden, wenn eine bestimmte Wegstrecke zurückgelegt wurde oder, wie bereits erwähnt, der Geber 56 eine entsprechende Knotenpunktstelle 102 beziehungsweise 103 passiert.

Hierzu ist es besonders vorteilhaft, daß das Werkzeug 24 mit einer Einrichtung zur Erfassung verschiedener Daten durch einen Kabelsatz 61 ausgestattet ist, die mittels einer Stromversorgungseinrichtung 18 mit Energie versorgt wird. Anstelle des in Figur 1 dargestellten Displays 17 kann auch eine optische Warneinrichtung oder eine Diode am Werkzeug 24 vorgesehen sein, die dann anspricht, wenn eine bestimmte Wegstrecke zurückgelegt ist beziehungsweise einer der Knotenpunkte 101 beziehungsweise 102 oder 103 passiert wurde.

Eine weitere Verbesserung des Werkzeugs 24 wird auch dadurch erreicht, daß in einer Datenbank verschiedene Abmessungen von Kabelschlauchanordnungen 60 und den verschiedenen Abzweigungen oder separaten Strängen oder Wegstrecken erfaßt werden, so daß aufgrund dieser Daten über den Rechner ein Kabelsatz mit seinen einzelnen Abzweigungen für einen bestimmten Fahrzeugtyp erstellt werden kann. Dieser Kabelsatz 61 kann dann auch auf einem Bildschirm sichtbar gemacht oder über einen Drucker ausgedruckt werden. Durch die erfindungsgemäße Erfassung aller kabelsatzrelevanten Daten lassen sich unterschiedliche Kabelsätze 61 erstellen, die gemäß Kundenwunsch für einen bestimmten Fahrzeugtyp in Form eines Ausdrucks der Bedienungsperson und dem Werkzeug 24 zugänglich gemacht werden.

In Figur 7 ist der bereits erwähnte Kabelsatz 61 dargestellt, der aus einem Hauptkabelstrang 110 mit zahlreichen abgezweigten Kabelsträngen 105, 106, 107, 108 und 109 bestehen kann, die nachstehend als Kabelabzweigungen bezeichnet werden. Gemäß Figur 7 sind die einzelnen Kabelabzweigungen 105 bis 109 vormontiert und mit je einem Kabelschlauch 23 überzogen. Bisher wurden die vorgefertigten Kabelabzweigungen auf einem mit Markierungselementen versehenen Montagetisch abgelegt und dann nach aufwendigen Meßarbeiten mit dem Hauptkabelstrang 110 verbunden. Nachdem diese Montagevorbereitung getroffen wurde, mußte der Hauptkabelstrang 110 mit dem Kabelschlauch 23 versehen werden. Hierzu wurde das Werkzeug 24 eingesetzt. Aufgrund der erfindungsgemäßen Ausbildung des Werkzeugs 24 ist es nun nicht mehr notwendig, den Kabelstrang in der beschriebenen Weise zu vermessen, zu montieren beziehungsweise fertigzustellen.

Der Montageablauf beziehungsweise das Erstellen des Kabelsatzes 61 ergibt sich aus den beiden Funktionsdarstellungen gemäß Figur 8 und 9. In einer Datenbank 30 werden zuerst alle Funktionen beziehungsweise Kriterien eines Kabelstrangs für die zu erstellenden Kraftfahrzeuge erfaßt, beispielsweise wird in die Datenbank 30 eingegeben, welche Kabelstränge an die Lichtmaschine, an das Schlußlicht, an die Steuerung oder Regelhydraulik oder an den Airbag angeschlossen werden sollen. Jedes Kraftfahrzeug kann zahlreiche Funktionsgruppen aufweisen, die über die einzelnen Kabelstränge mit der Stromversorgung 18 und den Steuer- beziehungsweise Regeleinrichtungen verbunden sind. Sind derartige Daten beziehungsweise Informationen über den Kabelsatz 61 erfaßt, so können sie gemäß einer graphischen Aufbereitung 31 als Strukturbild dargestellt werden. Nach Ermittlung des Kundenwunsches 32 wird der entsprechende Kabelsatz abgerufen und in eine Produktionsplanung 34 eingebracht. Nun läßt sich anhand der ermittelten Funktionen und der Kundenwünsche ein ganz spezieller Kabelsatz gemäß Schaubild 35 zeichnerisch darstellen und im einzelnen ein Kabelsatz 61 beziehungsweise der Hauptkabelstrang 110 als Grundmodul 36 festlegen. Steht der Kabelsatz 61 fest, kann der Hauptkabelstrang 110 mit dem Kabelschlauch 23 versehen werden. Hierzu wird das Werkzeug 24 in den Kabelschlauch 23 eingesetzt und fügt die einzelnen Schließelemente 26 zusammen. Hierzu fährt das Werkzeug 24 den Hauptkabelstrang 110 entlang, bis es an eine entsprechende Knotenpunktstelle, beispielsweise 101, gelangt. Da das Werkzeug mit einem Geber 56 und der Meßvorrichtung 13 ausgestattet ist, wird die Bedienungsperson nach Zurücklegen dieser Wegstrecke entweder optisch oder akustisch über eine Anzeigevorrichtung, beispielsweise über das Display 17, informiert und kann jetzt den ersten Kabelstrang 105 mit dem Hauptkabelstrang 110 verbinden oder aus dem Schlauch 23 herausführen, wenn der Kabelstrang 105 bisher parallel zum Hauptkabelstrang 110 verlaufend verlegt wurde. Im Bereich des Knotenpunkts 101 wird gemäß der graphischen Darstellung (gemäß Figur 8 bei 39) mittels des Werkzeugs 24 und der Einrichtung 29 zum Sichern der zusammengefügten Schließelemente 26 die Klammer 62 in den Kabelschlauch 23 eingesetzt, so daß nach diesem Arbeitsvorgang die Schließelemente 26 nicht mehr auseinandergehakt werden können. In vorteilhafter Weise wird vor und nach dem Knotenpunkt 101 ein derartiges Sicherungselement beziehungsweise eine Klammer 62 eingesetzt. Sollen derartige Klammern 62 nachträglich wieder gelöst werden, so können sie durch eine in der Zeichnung nicht dargestellte Aushebevorrichtung, die am Werkzeug 24 vorgesehen sein kann, wieder entfernt werden, ohne daß dabei der Kabelschlauch 23 beschädigt wird.

Das Werkzeug 24 wird nach Ausführung vorstehend beschriebener Arbeitsvorgänge weiter durch den Kabelschlauch 23 geführt, und die Bedienungsperson erhält über das Display 17 beziehungsweise gemäß Figur 8 über eine Wegstreckenanzeige 41 eine weitere Information, um die gleichen Arbeitsvorgänge wie an der Knotenpunktstelle 101 durchführen zu können.

Hat die Bedienungsperson mit dem Werkzeug 24 ein Schließende 42 beziehungsweise die Knotenpunktstellen 100 bis 103 erreicht, so wird sie entsprechend informiert und kann nun den Arbeitsvorgang abschließen und die Endstücke 43 des Kabelschlauchs 23 ebenfalls sichern.

Wurde beispielsweise (Position 43) versehentlich an einer Stelle gemäß den in Figur 9 dargestellten Arbeitspositionen ein Arbeitsvorgang oder Tackervorgang falsch ausgeführt, so läßt sich der Fehler durch einen entsprechenden Verfahrensschritt korrigieren oder rückgängig machen und der Arbeitsvorgang kann wiederholt werden, ohne daß dadurch der gesamte Arbeitsablauf gemäß des erfindungsgemäßen Verfahrens beeinträchtigt wird.

Falls ein nachträglicher Einbau (vergl. Öffnen 44 gemäß Figur 8) eines Kabelstrangs, beispielsweise 106, erforderlich wird, kann mittels des Werkzeugs 24 der Kabelschlauch nochmals geöffnet werden und, um danach den Kabelstrang 106 mit dem Hauptkabelstrang 110 zu verbinden, können die entsprechenden Klammern 62 entfernt werden. Nach Abschluß aller Arbeiten wird das Ende 45 aller Arbeitsgänge auf dem Display 17 angegeben, so daß die Bedienungsperson weiß, daß der Kabelsatz 61 fertiggestellt ist.

Gemäß Figur 9 kann der Arbeitsablauf zum Erstellen des Kabelsatzes 61 weiter verbessert werden. Werden gemäß Figur 8 alle Daten eines Kabelsatzes entsprechend erfaßt, können diese mittels einer CAD-Anlage 46 aufbereitet und bei 47 gemäß Figur 9 bereitgestellt werden, um somit die Produktionsreihenfolge (Server) 48 der einzelnen Kabelsätze 61 festzulegen. Der Transfer der Daten 49 aus dem Server 48 an das Werkzeug 24 kann per Funk, Diskette oder Eprom übermittelt werden. Auf diese Weise erhält man eine optimale Steuerung des Werkzeugs 24 beim Erstellen eines Kabelsatzes 61. Die einzelnen Informationen können von der Bedienungsperson auf dem Display 17 abgelesen werden (vergl. Info Schließen 50 gemäß Figur 8). Nach Zurücklegen einer bestimmten Wegstrecke wird die Bedienungsperson mittels Display 17 (gemäß Wegstreckenanzeige 52 nach Figur 9) über ein akustisches Signal oder über eine LED-Anzeige entsprechend informiert, was zu tun ist beziehungsweise ob eine weitere Sicherung des Reißverschlusses 57 erfolgen soll beziehungsweise gemäß 45 alle Arbeiten zum Erstellen des Kabelsatzes 61 durchgeführt sind (vergl. Ende 45 gemäß Figur 8). Alle nicht erwähnten Arbeitsvorgänge zum Erstellen eines Kabelsatzes 61 sind in der Beschreibung der Figur 8 erwähnt.

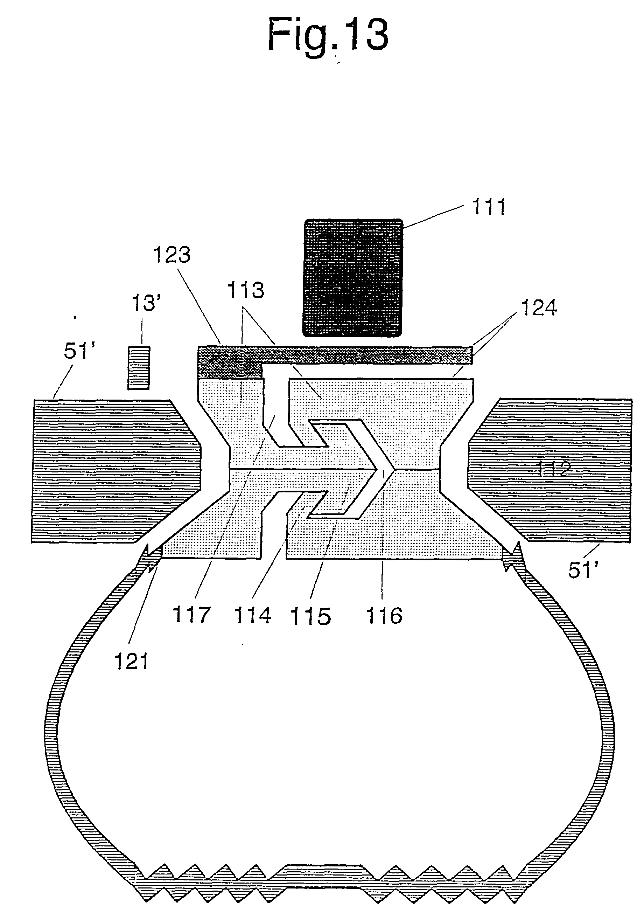

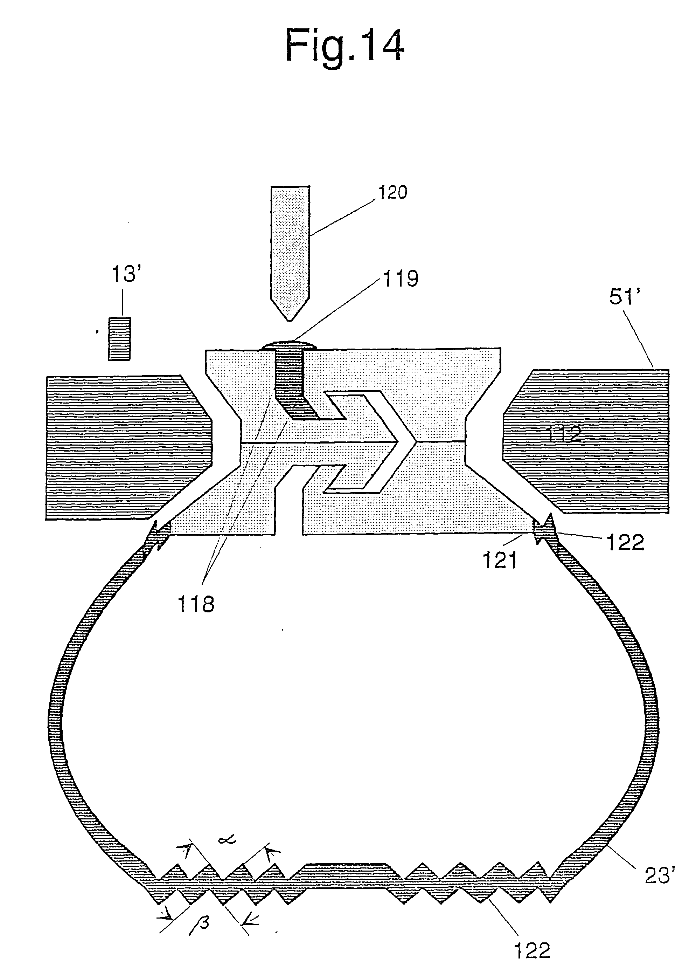

Der in Figur 14 dargestellte Kabelschlauch beziehungsweise die Umhüllung dient zur Aufnahme von Teilen, wie z.B. Kabeln, elektrischen Teilen oder anderen elekrischen Teilen, die vor Feuchtigkeit oder Spritzwasser geschützt werden sollen. Die Umhüllung beziehungsweise der Kabelschlauch 23' kann gemäß den Figuren 13 und 14 aus zwei nach außen gewölbt geformten Seitenwänden bestehen, die über ein mit Bezug auf die Figuren 13 und 14 horizontal verlaufendes Wandteil verbunden sind. In den seitlichen, gegenüberliegenden Wandteilen der Umhüllung 23' beziehungsweise in dem horizontal verlaufenden Wandteil befindet sich ein Dehnteil 122, so daß bei übermäßig starkem Druck der Querschnitt bei Aufnahme der Kabelteile verändert werden kann und sich somit besser der Außenkontur der einzelnen Kabelelemente anpaßt. Das Dehnteil 122 kann beispielsweise ziehharmonika-artig ausgebildet sein. Es ist jedoch auch möglich, das Dehnteil 122 in einem bestimmten Bereich Z-förmig auszubilden, so daß sich dieser Bereich bei stärkerem Druck soweit dehnt, bis sich eine durchgehende einteilige, nicht gefaltete Wand bildet.

Anstelle des Kabelschlauchs und des dort dargestellten Dehnteils kann auch der Kabelschlauch selbst aus einem dehnbaren Material hergestellt sein, das sich den Außenkonturen der im Kabelschlauch angeordneten Teile anpaßt.

Gemäß Figur 13 sind die beiden gegenüberliegenden Wandteile mit ihren entsprechenden Enden 121 an zwei gegenüberliegende Schließelemente 113 fest angeschlossen. Das Ende des Wandteils 121 kann beispielsweise über eine thermische Verbindung oder auch über eine Klebeverbindung mit dem Schließelement 113 fest verbunden werden.

Gemäß Figur 13 bestehen die beiden zusammenfügbaren Schließelemente 113 aus einem Paßelement beziehungsweise hakenförmig ausgebildeten Federelement 115, das in eine entsprechende, der Kontur des Federelements angepaßte Nut 116 eingeschoben wird, wenn hierzu das Werkzeug 24 mit entsprechenden Gleitelementen 112 gegen die Rückseite der beiden gegenüberliegenden Schließelemente 113 gedrückt wird. Hierzu kann die Rückseite 113 in etwa V-förmig ausgebildet sein, in die die Gleitelemente 112 hineingedrückt werden und die dann an der Außenkontur der Gleitelemente 112 entlangfahren, so daß bei diesem Arbeitsvorgang die Schließelemente 113 ineinandergefügt werden und damit eine feste Verbindung untereinander herstellen.

Oberhalb der zusammengefügten Schließelemente 113 befindet sich eine Lasche 123, die zumindest beim Arbeitsbeginn an einem Schließelement, gemäß Figur 3 an dem linken Schließelement 113, fest angeschlossen ist. Diese Lasche 123 überlagert die gesamte obere Fläche der beiden zusammengefügten Schließelemente 113 und überdeckt dabei eine Nut beziehungsweise einen Zwischenraum 117, der zwischen den Flächen 118 gebildet wird. Die zusammengefügten gegenüberliegenden Klebeflächen 118 weisen untereinander einen Abstand auf, so daß in diesen Zwischenraum beziehungsweise in diese Nut 117 eine Klebemasse 119 eingebracht werden kann. Die Klebemasse 119 wird gemäß Figur 14 über ein Spritzwerkzeug zugeführt. In Figur 14 ist lediglich die Spritzdüse 120 des nicht weiter dargestellten Spritzwerkzeugs abgebildet. Die Klebemasse 119 wird in die obere Nut 117 eingefügt und schließt damit den Innenraum des Kabelschlauchs 23' dichtend ab, so daß kein Spritzwasser beziehungsweise keine Feuchtigkeit in den Innenraum des Kabelschlauchs 23' eindringen kann. Soll der Kabelschlauch absolut wasserdicht sein, so muß hierzu die Wandung des Kabelschlauchs entsprechend ausgelegt werden, damit sie einem entsprechenden Druck standhalten kann.

Anstelle der in Figur 14 dargestellten Klebemasse 119 kann auch nur die Lasche 123 eine feste und dichte Verbindung zwischen den beiden Schließelementen 113 herstellen. Die Lasche 123 kann beispielsweise mit der Schweißfläche 124 des rechten Schließelements 113 über eine Klebemasse verbunden werden. Es ist jedoch auch möglich, die Lasche 123 über ein Ultraschweißverfahren mit der Schweißfläche 124 dichtend zu verbinden. Hierzu wird ein entsprechendes, in Figur 13 lediglich schematisch angedeutetes Schweißwerkzeug 111 eingesetzt, das eine Ultraschweißverbindung zwischen den Klebeflächen herstellt.

Anstelle einer Ultraschweißverbindung ist auch eine thermische Verbindung zwischen den einzelnen Klebeflächen der Schließelemente 113 möglich. Hierzu wird die Oberfläche der entsprechenden Teile so weit erhitzt, bis eine Klebeverbindung zwischen den einzelnen zu verbindenden Teilen hergestellt wird. Es ist also auch möglich, das Werkzeug 111 als Heizelement auszubilden, das die entsprechenden Stellen soweit erhitzt, bis die gewünschte Klebeverbindung zwischen den zu verbindenden Teilen hergestellt ist.

In Figur 13 sind die Wände 112 des Schiebers 51' V-förmig ausgebildet. Es ist jedoch auch möglich, die Wände ballig auszubilden, wobei die entsprechenden Gegenstücke der Wände der Schließelemente 113 eine entsprechend angepaßte Kontur aufweisen.

Gemäß Figur 14 verläuft das Dehnteil 122 zickzackförmig Verlauf mit entsprechenden Vertiefungen, die einen Winkel α beziehungsweise β aufweisen, der zwischen 45° und 110° oder in vorteilhafter Weise zwischen 50° und 95° betragen kann.

Im Ausführungsbeispiel gemäß Figur 14 sind vier hintereinander angeordnete Vertiefungen durch den zickzackförmigen Verlauf des Dehnteils 122 abgebildet. Je nach Querschnittsgröße kann das Dehnteil auch verlängert werden und weist dann eine entsprechend größere Anzahl von Vertiefungen auf.

Das im unteren Wandteil vorgesehene Dehnteil 122 kann auch in die Seitenteile der Wandelemente der Umhüllung integriert werden. Die hierdurch vorteilhaft ausgebildete Umhüllung beziehungsweise der Kabelschlauch 23' mit den ohne weiteres zusammenfügbaren Schließelementen läßt sich durch das entsprechende Werkzeug in kurzer Zeit ohne großen Kraftaufwand sehr exakt montieren.

Soll beispielsweise der Kabelschlauch 23, 23' wieder geöffnet werden, so müssen lediglich die einzelnen Verschlußelemente oder die Klebeverbindung entfernt werden, um dann die Schließelemente außeinander zu nehmen. Das Öffnen des Kabelschlauchs 23 läßt sich insbesondere dann besonders leicht vornehmen, wenn keine Klebeverbindung sondern lediglich eine zusammensteckbare beziehungsweise ineinanderfügbare Verbindung gewählt wird.

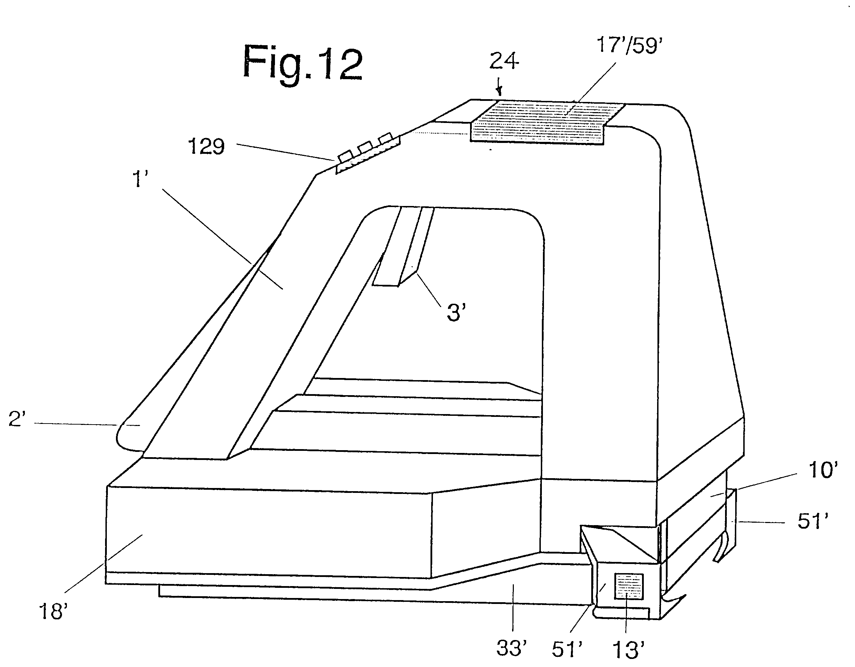

Gemäß den Figuren 12, 15 und 16 kann das Werkzeug 24 mit Bedienungselementen 129 ausgestattet sein, die im Griff 2 integriert sind und in Verbindung mit einem nicht dargestellten Rechner am Werkzeug eine Steuerfunktion auslösen, so daß - wie eingangs beschrieben - der Kabelschlauch 23' zusammengefügt wird.

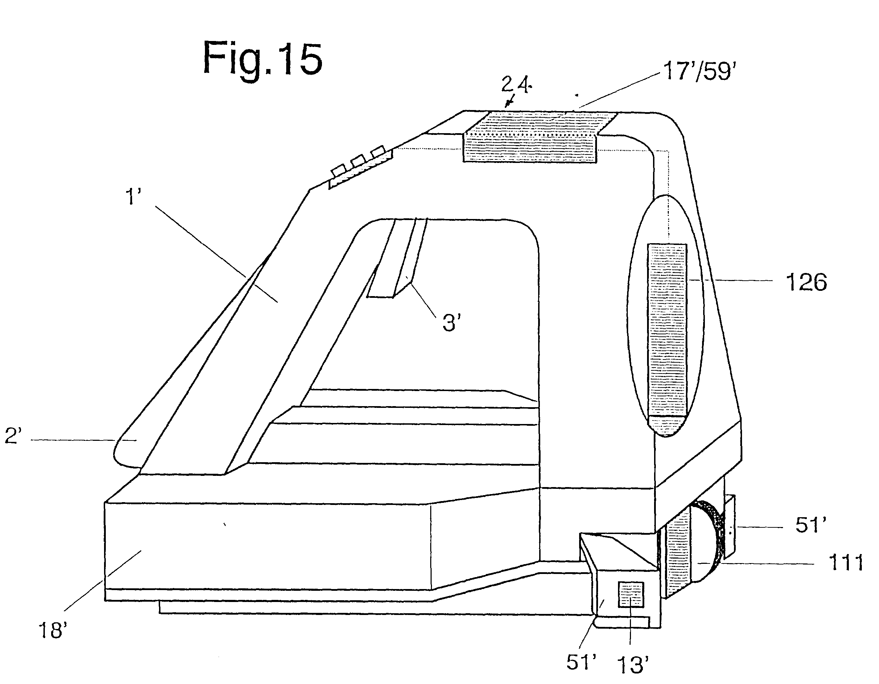

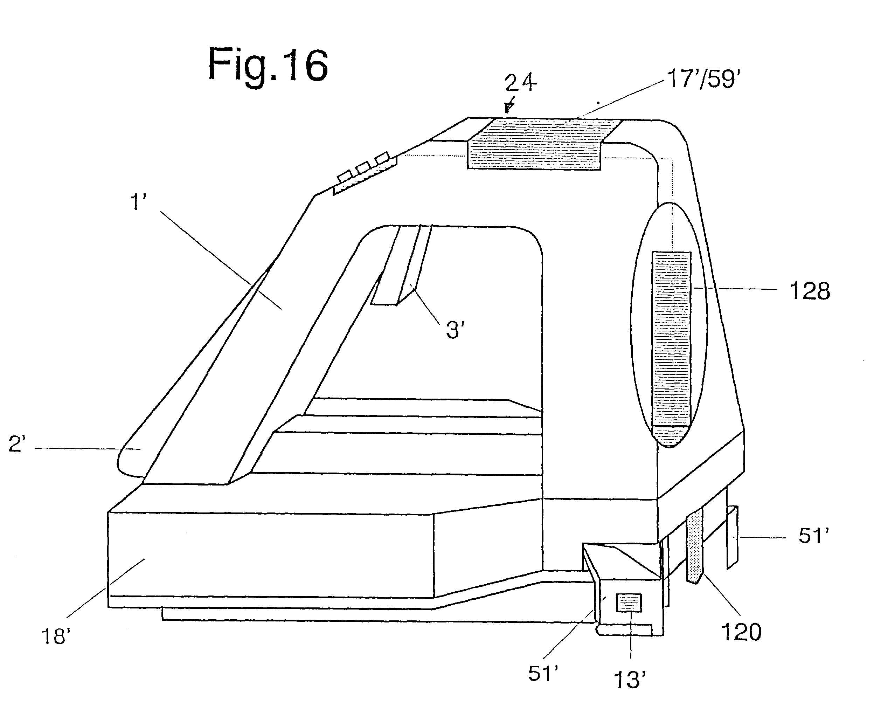

Die einzelnen Verbindungselemente 26 können gemäß Figur 16 mittels eines in einem Klebstofftank 128 vorgesehenen Klebers verbunden werden. Ferner ist es möglich, die Verbindungselemente 26 mittels eines Schweißtrafos (Figur 15) zu verbinden.

## Patentansprüche

1. Vorrichtung zum Verschließen von Umhüllungen wie Kabelschläuche (23), flexible Rohrleitungen oder Behälterelemente mittels einer an einem Werkzeug (24) vorgesehenen Verschlußeinrichtung (25), bei der an zwei gegenüberliegenden Randteilen der Umhüllung über einen am Werkzeug (24) angeordneten Schieber (27) Schließelemente (26) wechselseitig ineinander und beim Öffnen auseinandergehakt beziehungsweise getrennt werden, **dadurch gekennzeichnet,** daß an dem Werkzeug (24) zur Aufnahme des Schiebers (27) eine weitere Einrichtung (29) zum Sichern der zusammengefügten Schließelemente beziehungsweise Verbindungselemente (26) vorgesehen ist, die jeweils unabhängig von der Stellung des Schiebers (27) aktivierbar ist.

2. Vorrichtung nach Anspruch 1, **dadurch gekennzeichnet,** daß die Einrichtung (29) zum Sichern der zusammengefügten Schließelemente (26) im Bereich des Schiebers vorgesehen ist.

3. Vorrichtung nach Anspruch 1 oder 2, **dadurch gekennzeichnet,** daß die Einrichtung (29) zum Sichern der zusammengefügten Schließelemente (26) beziehungsweise eines Reißverschlusses (57) mit Bezug auf die Bewegungsrichtung des Schiebers (27) vor oder hinter dem Schieber (27) vorgesehen ist.

4. Vorrichtung nach Anspruch 1, **dadurch gekennzeichnet,** daß die Einrichtung (29) aus einem am Werkzeug (24) geführten Stempel (54) und einem mit diesem zusammenwirkenden Amboß oder einer Matrize (10) gebildet ist, die über ein Stellelement (58) aktivierbar ist.

5. Vorrichtung nach einem oder mehreren der vorhergehenden Ansprüche, **dadurch gekennzeichnet,** daß die Einrichtung (29) zum Sichern der zusammengefügten Schließelemente (26) aus einem am Werkzeug (24) geführten Stempel (54) und einem mit diesem zusammenwirkenden Amboß oder einer Matrize (10) gebildet ist, wobei die Einrichtung (29) über ein Stellelement (58) aktivierbar ist, das mit einem Geber (56) zusammenwirkt, der nach Zurücklegen einer bestimmten Wegstrecke des Werkzeugs (24) einen Stellimpuls auslöst und ein Verstellen des Stempels (54) bewirkt.

6. Vorrichtung nach einem oder mehreren der vorhergehenden Ansprüche, **dadurch gekennzeichnet,** daß die Einrichtung (29) zum Sichern der zusammengefügten Schließelemente (26) eines Reißverschlusses (57) mit einer hydraulischen, pneumatischen oder elektrischen Stellvorrichtung (21) in Wirkverbindung steht, die mit dem Stellelement (58) und/oder dem Stempel (54) in Wirkverbindung steht.

7. Vorrichtung nach einem oder mehreren der vorhergehenden Ansprüche, **dadurch gekennzeichnet,** daß die Einrichtung (29) zum Sichern der zusammengefügten Schließelemente (26) aus einem hydraulischen oder pneumatischen Stellzylinder (21) besteht, der mit einer Auslösevorrichtung (55) des Stempels (54) wirkungsmäßig verbunden ist.

8. Vorrichtung nach Anspruch 1, **dadurch gekennzeichnet,** daß der Verschlußeinrichtung (25) und/oder der Einrichtung zum Sichern der zusammengefügten Schließelemente (26) eine Meßvorrichtung (13) zugeordnet ist, die mit einem Rechner zusammenschließbar ist.

9. Vorrichtung nach Anspruch 1, **dadurch gekennzeichnet,** daß die Meßvorrichtung (13) aus einem Meßrad oder einem Impulsgeber besteht, der eine durch das Werkzeug (24) zurückgelegte Wegstrecke erfaßt und bei einer bestimmten Stelle eine Stellinformation an den Geber (56) weiterleitet, der ein Verstellen des Stempels (54) bewirkt.

10. Vorrichtung nach Anspruch 1, **dadurch gekennzeichnet,** daß die Meßvorrichtung (13), die Verschlußeinrichtung (25) und die Einrichtung zum Sichern der zusammengefügten Schließelemente (26) in einer Baueinheit zusammengefaßt sind.

11. Vorrichtung nach Anspruch 1, **dadurch gekennzeichnet,** daß die Meßvorrichtung (13), die Verschlußeinrichtung (25) und die Einrichtung zum Sichern der zusammengefügten Schließelemente (26) in einem elektrischen Modul zusammengefaßt sind.

12. Vorrichtung nach Anspruch 1, **dadurch gekennzeichnet,** daß die Meßvorrichtung (13), die Verschlußeinrichtung (25) und die Einrichtung zum Sichern der zusammengefügten Schließelemente (26) in einem elektrischen Modul zusammengefaßt sind, wobei die Meßvorrichtung (13), die Verschlußeinrichtung (25) und die Einrichtung zum Sichern der zusammengefügten Schließelemente (26) mit einer elektrischen Steuervorrichtung (59) in Wirkverbindung stehen.

13. Vorrichtung nach Anspruch 1, **dadurch gekennzeichnet,** daß zu der Steuervorrichtung (59) der Rechner (30) gehört, über dessen in der Datenbank abgelegtes Steuerprogramm die Einrichtung (29) zum Sichern der zusammengefügten Schließelemente (26) in Abhängigkeit einer zurückgelegten Wegstrecke des Werkzeugs (24) steuerbar ist.

14. Vorrichtung nach Anspruch 1, **dadurch gekennzeichnet,** daß das Werkzeug (24) mit einer Einrichtung zur Erfassung verschiedener Daten über einen Kabelsatz (61) ausgerüstet ist, die mit einer Stromversorgungseinrichtung (18) in Verbindung steht.

15. Vorrichtung nach Anspruch 1, **dadurch gekennzeichnet,** daß das Werkzeug (24) mit einer akustischen und/oder optischen Anzeigevorrichtung beziehungsweise einem Display (17) ausgestattet ist.

16. Vorrichtung nach einem oder mehreren der vorhergehenden Ansprüche, **dadurch gekennzeichnet,** daß das Werkzeug (24) eine Entriegelungsvorrichtung aufweist, die über den Geber (56) ansteuerbar ist und Schließelemente (29) dann löst, wenn in einen erstellten Kabelstrang (61) eine weitere Abzweigung (106) eingefügt beziehungsweise an die Hauptkabelabzweigung (110) angeschlossen werden soll.

17. Vorrichtung nach Anspruch 2, **dadurch gekennzeichnet,** daß das Werkzeug (24) mit mehreren Einrichtungen (29) zum Sichern der Klammern (62) ausgestattet ist.

18. Vorrichtung nach Anspruch 5, dadurch gekennzeichnet, daß der Amboß (10) an seinen beiden sich gegenüberliegenden Enden mit einer Rundung versehen sein kann.

19. Vorrichtung nach Anspruch 5, **dadurch gekennzeichnet,** daß die Rundung durch den Radius = R bestimmt wird, der halb so groß ist wie die Dicke = D des Ambosses (10).

20. Vorrichtung nach Anspruch 5, **dadurch gekennzeichnet,** daß der Radius R eine Größe zwischen 1 und 50 mm aufweist.

21. Umhüllung hergestellt mit der Vorrichtung gemäß Anspruch 1, **dadurch gekennzeichnet,** daß die nach dieser Vorrichtung hergestellte Umhüllung beziehungsweise der Kabelschlauch (23) als Schließelenente (26) einen Reißverschluß (57) mit ineinandergreifenden Zähnen oder zusammenfügbaren Nut- und Federelementen (114, 115) oder verklebbeziehungsweise verschweißbaren, gegeneinander anlegbaren Verbindungselementen aufweist.

22. Umhüllung hergestellt mit der Vorrichtung gemäß Anspruch 1, **dadurch gekennzeichnet,** daß die Paßfeder (115) als Haken ausgebildet ist, der in die Nut (114) einfügbar ist.

23. Umhüllung hergestellt mit der Vorrichtung gemäß Anspruch 1, **dadurch gekennzeichnet,** daß die gegenüberliegenden Verbindungselemente des Schließelements (26) über ein Klebemittel miteinander verbindbar sind.

24. Umhüllung hergestellt mit der Vorrichtung gemäß Anspruch 1, **dadurch gekennzeichnet,** daß die gegenüberliegenden Verbindungselemente des Schließelements (26) thermisch miteinander verbindbar sind.

25. Umhüllung hergestellt mit der Vorrichtung gemäß Anspruch 1, **dadurch gekennzeichnet,** daß die gegenüberliegenden Verbindungselemente gegeneinander zur Anlage bringbare Flächen aufweisen, auf die das Klebemittel aufbringbar ist.

26. Umhüllung hergestellt mit der Vorrichtung gemäß Anspruch 1, **dadurch gekennzeichnet,** daß die gegenüberliegenden Verbindungselemente (26) an ihren gegenüberliegenden Flächen derart behandelt werden, daß sie miteinander eine feste Verbindung eingehen.

27. Umhüllung hergestellt mit der Vorrichtung gemäß Anspruch 1, **dadurch gekennzeichnet,** daß die Umhüllung (23) zur Veränderung ihres Querschnittes . Dehnungselemente (122) aufweist.

28. Verfahren zum Verschließen von Umhüllungen wie Kabelschläuche (23), flexible Rohrleitungen oder Behälterelemente geeignet für eine Vorrichtung nach Anspruch 1, **dadurch gekennzeichnet,** daß mittels des Werkzeugs (24) zuerst die Schließelemente (26) zusammengefügt und mittels einer Einrichtung (29) zum Sichern der zusammengefügten Schließelemente (26) fest verbunden werden, wobei im Bereich des Kabelknotenpunkts (101) ein, zwei oder mehrere Schließelemente (26) in den Kabelschlauch einsetzbar sein können.

29. Verfahren zum Verschließen von Umhüllungen wie Kabelschläuche (23), flexible Rohrleitungen oder Behälterelemente geeignet für eine Vorrichtung nach Anspruch 1, **dadurch gekennzeichnet,** daß in einer Datenbank (30) verschiedene Abmessungen von Kabelschlauchanordnungen (60) und von verschiedenen Abzweigungen (105 bis 109) oder separaten Strängen (100 bis 103) und/oder die Wegstrecken zwischen zwei Knotenpunkten von Kabelschlauchanordnungen (60) abgelegt sind, die der Steuervorrichtung (59) des Werkzeugs (24) zur Verfügung gestellt werden können.

30. Verfahren geeignet für eine Vorrichtung nach Anspruch 1 oder 15, **gekennzeichnet durch** folgende Verfahrensschritte:
a) Eingabe der Schlüsselnummer eines bestimmten Wagentyps gemäß Kundenwunsch in die Datenbank (30),
b) Auswahl des Kabelsatzes (61) gemäß Wagentyp und Kundenwunsch (32),
c) Festlegen der Reihenfolge der zu montierenden Fahrzeuge (34) in einer bestimmten Reihenfolge 1 bis n,
d) Schließen des Reißverschlusses mittels des Werkzeugs (24),
e) Ermitteln der Wegstrecke zwischen zwei Knotenpunkten (100 und 101) des Kabelsatzes (61),
f) Sichern der Schließelemente (26) des Reißverschlusses (57) mittels der Einrichtung (29).

31. Verfahren geeignet für eine Vorrichtung nach Anspruch 1 oder 15, **gekennzeichnet durch** folgende Verfahrensschritte:
a) Eingabe der Schlüsselnummer eines bestimmten Wagentyps gemäß Kundenwunsch in die Datenbank (30),
b) Auswahl des Kabelsatzes (61) gemäß Wagentyp und Kundenwunsch (32),
c) Festlegen der Reihenfolge der zu montierenden Fahrzeuge (34) in einer bestimmten Reihenfolge 1 bis n,
d) Erstellen einer Zeichnung (35) des Kabelsatzes (61) und Wiedergabe auf einem Display (38),
e) Schließen des Reißverschlusses mittels des Werkzeugs (24),
f) Ermitteln der Wegstrecke zwischen zwei Knotenpunkten (100 und 101) des Kabelsatzes (61),
g) Sichern der Schließelemente (26) des Reißverschlusses (57) mittels der Einrichtung (29).

32. Verfahren geeignet für eine Vorrichtung nach Anspruch 1 oder 15, **dadurch gekennzeichnet,** daß die in der Datenbank (30) abgelegten Informationen über einen Kabelsatz (61) für einen bestimmten Wagentyp graphisch (31) aufbereitet und auf einem Bildschirm sichtbar und/oder als Zeichnung ausgedruckt werden.

33. Verfahren geeignet für eine Vorrichtung nach Anspruch 1 oder 15, **dadurch gekennzeichnet,** daß die in der Datenbank (30) abgelegten Informationen über einen Kabelsatz (61) nach Eingabe einer bestimmten Kennummer eines Wagentyps mit Festlegen der einzelnen Abstände zwischen zwei Knotenpunkten graphisch (31) aufbereitet einer Produktionsplanung (34) zur Verfügung gestellt werden.

34. Verfahren geeignet für eine Vorrichtung nach Anspruch 1 oder 15, **dadurch gekennzeichnet,** daß die über das Werkzeug (24) zusammengefügten Schließelemente (26) im Bereich eines Knotenpunkts (101) vor und/oder nach einem Knotenpunkt und/oder im Bereich eines Schließelements über ein Befestigungselement oder eine Klammer (62) gesichert werden, die mittels der Einrichtung (29) zwischen jeweils zwei gegenüberliegenden Schließelementen (29) eingesetzt werden.

## Claims

1. A device to close sheathings, such as cable conduits (23), flexible pipelines or container elements by means of a closure device (25) provided on a tool (24), whereby closure elements (26) at two rim parts of the sheathing located opposite each other can be alternatingly hooked together and unhooked, or separated, when being opened by means of a slider (27) disposed on the tool (24), characterized in that an additional device (29) for securing the connected closure elements or connecting elements (26), which can be activated independently of the respective position of the slider (27), is provided on the tool (24) for receiving the slider (27).

2. The device in accordance with claim 1, characterized in that the device (29) for securing the connected closure elements (26) is situated in the area of the slider.

3. The device in accordance with claim 1 or 2, characterized in that the device (29) for securing the connected closure elements (26) or the zipper (57) is situated in front of or behind the slider (27) with respect to the direction of movement of the slider (27).

4. The device in accordance with claim 1, characterized in that the device (29) is made up of a plunger (54) affixed on the tool (24) or of an anvil or a matrix (10) interacting with it, which can be activated by means of a regulating element (58).

5. The device in accordance with one or several of the preceding claims, characterized in that the device (29) for securing the connected closure elements (26) is made up of a plunger (54) affixed on the tool (24) or of an anvil or a matrix (10) interacting with it, whereby the device (29) can be activated by means of a regulating element (58) which interacts with a transmitter (56) that triggers a regulating pulse after the tool (24) has traveled a defined distance and causes a displacement of the plunger (54).

6. The device in accordance with one or several of the preceding claims, characterized in that the device (29) for securing the connected closure elements (26) of a zipper (57) is operatively connected to a hydraulic, pneumatic or electric regulating device (21), which is operatively connected to the regulating element (58) and/or with the plunger (54).

7. The device in accordance with one or several of the preceding claims, characterized in that the device (29) for securing the connected closure elements (26) consists of a hydraulic or pneumatic regulating cylinder (21), which is operatively connected to a trigger device (55) of the plunger (54).

8. The device in accordance with claim 1, characterized in that a measuring device (13) is associated with the closure device (25) and/or with the device (29) for securing the connected closure elements (26), which can be connected to a computer.

9. The device in accordance with claim 1, characterized in that the measuring device (13) consists of a measuring wheel or a pulse transmitter which detects a distance traveled by the tool (24) and, at a defined point, forwards regulating information to a transmitter (56), which causes a displacement of the plunger (54).

10. The device in accordance with claim 1, characterized in that the measuring device (13), the closure device (25) and the device for securing the connected closure elements (26) are combined in one component.

11. The device in accordance with claim 1, characterized in that the measuring device (13), the closure device (25) and the device for securing the connected closure elements (26) are combined in an electrical module.

12. The device in accordance with claim 1, characterized in that the measuring device (13), the closure device (25) and the device for securing the connected closure elements (26) are combined in an electrical module, whereby the measuring device (13), the closure device (25) and the device for securing the connected closure elements (26) are operatively connected to an electrical control device (59).

13. The device in accordance with claim 1, characterized in that the computer (30) is part of the control device (59), whose control program stored in a database can control the device (29) for securing the connected closure elements (26) as a function of a distance traveled by the tool (24).

14. The device in accordance with claim 1, characterized in that the tool (24) is equipped with a device for recording various data about a cable set (61) and is connected to a current supply source (18).

15. The device in accordance with claim 1, characterized in that the tool (24) is equipped with an acoustical and/or optical indicator device or display (17).

16. The device in accordance with one or several of the preceding claims, characterized in that the tool (24) has an unlocking device which can be controlled via the transmitter (56) and unlocks the closure elements (29) if a further branch (106) is to be added to a produced cable bundle (61) or is to be connected to the main cable branch (110).

17. The device in accordance with claim 2, characterized in that the tool (24) is equipped with several devices (29) for securing the clips (62).

18. The device in accordance with claim 5, characterized in that the anvil (10) can be provided with a curvature on its two opposite ends.

19. The device in accordance with claim 5, characterized in that the curvature is determined by the radius (R) that is half the thickness (D) of the anvil (10).

20. The device in accordance with claim 5, characterized in that the radius (R) has a value between 1 mm and 50 mm.

21. A sheathing produced with the device of claim 1, characterized in that the sheathing created by means of this device or the cable conduit (23) has, as closure elements (26), a zipper (57) with intermeshing teeth or connectable tongue-and-groove elements (114, 115) or connecting elements, which lie against each other and can be glued or welded together.

22. The sheathing produced with the device of claim 1, characterized in that the fitted spring (115) is designed as a hook which can be inserted into the groove (114).

23. The sheathing produced with the device of claim 1, characterized in that the connecting elements of the closure element (26) located opposite each other can be connected by means of an adhesive.

24. The sheathing produced with the device of claim 1, characterized in that the connecting elements of the closure element (26) located opposite each other can be thermally connected to each other.

25. The sheathing produced with the device of claim 1, characterized in that the connecting elements located opposite each other have surfaces which can be brought into contact with each other and to which the adhesive can be applied.

26. The sheathing produced with the device of claim 1, characterized in that the connecting elements (26) located opposite each other are treated on their surfaces located opposite each other in such a way that they form a secure connection with each other.

27. The sheathing produced with the device of claim 1, characterized in that the sheathing (23) has expansion elements (122) for changing its cross section.

28. A process for closing sheathings, such as cable conduits (23), flexible pipelines or container elements, suitable for a device in accordance with claim 1, characterized in that the closure elements (26) are first connected to each other by means of the tool (24) and are securely connected to each other by means of a device (29) for securing the connected closure elements (26), whereby one, two or several closure elements (26) can be inserted into the cable conduit in the area of the cable junction (101).

29. The process for closing sheathings, such as cable conduits (23), flexible pipelines or container elements, suitable for a device in accordance with claim 1, characterized in that various dimensions of cable conduit arrangements (60) and various branches (105 to 109) or separate bundles (100 to 103) and/or the distances between two junctions of cable conduit arrangements (60) are stored in a database (30) and can be made available to the control device (59) of the tool (24).

30. The process suitable for a device in accordance with claim 1 or 15, characterized by the following process steps:
a. Entry of the key number of a defined car type in accordance with customer specifications into the database (30),
b. Selection of a cable set (61) in accordance with the car type and customer specifications (32),
c. Determination of the sequence of the vehicles (34) to be assembled in a defined sequence from 1 to n,
d. Closure of the zipper by means of the tool (24),
e. Determination of the distance between two junctions (100 and 101) of the cable set (61),
f. Securing the closure elements (26) of the zipper (57) by means of the device (29).

31. The process suitable for a device in accordance with claim 1 or 15, characterized by the following process steps:
a. Entry of the key number of a defined car type in accordance with customer specifications into the database (30),
b. Selection of a cable set (61)in accordance with the car type and customer specifications (32),
c. Determination of the sequence of the vehicles (34) to be assembled in a defined sequence from 1 to n,
d. Preparation of a drawing (35) of the cable set (61) and reproducing it on a display (38),
e. Closure of the zipper by means of the tool (24),
f. Determination of the distance between two junctions (100 and 101) of the cable set (61),
g. Securing the closure elements (26) of the zipper (57) by means of the device (29).

32. The process suitable for a device in accordance with claim 1 or 15, characterized in that the information about a cable set (61) for a defined car type stored in the database (30) is processed graphically (31) and is displayed on a screen and/or printed out as a drawing.

33. The process suitable for a device in accordance with claim 1 or 15, characterized in that the information about a cable set (61) for a defined car type stored in the database (30) is processed after the entry of a defined numerical characteristic of a car type along with the determination of the individual distances between two junctions and this information is then processed graphically (31) and made available to production planning (34).

34. The process suitable for a device in accordance with claim 1 or 15, characterized in that, in the area of a junction (101) in front of and/or behind the junction and/or in the area of a closure element, the closure elements (26) that are locked together by means of the tool (24) are secured by a fastening element or a clip (62) which is inserted by means of the device (29) between two closure elements (29) located opposite each other.

## Revendications

1. Dispositif pour la fermeture d'enveloppes telles que des gaines de câble (23), des conduits de tuyaux flexibles ou d'éléments de contenants au moyen d'un dispositif de fermeture (25) monté sur un outil (24), dispositif par lequel des éléments de fermeture (26) sur deux parties en bordure de l'enveloppe qui se font face sont assemblés en alternance et défaits pour l'ouverture par un curseur (27) disposé sur l'outil (24), caractérisé en ce que sur l'outil (24) qui reçoit le curseur (27) est prévu un autre dispositif (29) pour arrêter les éléments de fermeture assemblés ou les éléments de jointure (26), dispositif activable indépendamment de la position du curseur (27).

2. Dispositif selon la revendication 1, caractérisé en ce que le dispositif (29) destiné à arrêter les éléments de fermeture (26) assemblés est prévu dans la zone du curseur.

3. Dispositif selon la revendication 1 ou 2, caractérisé en ce que le dispositif (29) pour arrêter les éléments de fermeture (26) assemblés, ou une fermeture à glissière, est prévu en amont ou en aval du curseur (27) en tenant compte du sens de déplacement du curseur (27).

4. Dispositif selon la revendication 1, caractérisé en ce que le dispositif (29) est constitué par un poinçon (54) guidé par l'outil (24) et par une enclume ou une matrice (10) en interdépendance avec le poinçon, ledit dispositif étant activable par l'élément actionneur (58).

5. Dispositif selon l'une ou plusieurs des revendications ci-avant, caractérisé en ce que le dispositif (29) pour arrêter les éléments de fermeture (26) assemblés consiste en un poinçon (54) guidé par l'outil (24) et en une enclume ou une matrice (10) en interdépendance avec le poinçon, le dispositif (29) étant activable par un élément actionneur (58) en interaction avec un capteur (56) qui, une fois que l'outil (24) a parcouru une certaine distance, déclenche une impulsion d'actionnement et un changement de position du poinçon (54).

6. Dispositif selon l'une ou plusieurs des revendications ci-avant, caractérisé en ce que le dispositif (29) pour l'arrêt des éléments de fermeture (26) assemblés d'une fermeture à glissière (57) est en interdépendance avec un dispositif actionneur (21) hydraulique, pneumatique ou électrique en interaction avec l'élément actionneur (58) et/ou le poinçon (54).

7. Dispositif selon l'une ou plusieurs des revendications ci-avant, caractérisé en ce que le dispositif (29) pour arrêter les éléments de fermeture (26) assemblés consiste en un cylindre actionneur (21) hydraulique ou pneumatique relié en interdépendance active avec un dispositif déclencheur (55) du poinçon (54).

8. Dispositif selon la revendication 1, caractérisé en ce qu'un dispositif de mesure (13) connectable à un calculateur est assigné au dispositif de fermeture (25) et/ou au dispositif pour l'arrêt des éléments de fermeture (26) assemblés.

9. Dispositif selon la revendication 1, caractérisé en ce que le dispositif de mesure (13) consiste en une roue mesureuse ou un générateur d'impulsion qui enregistre une distance parcourue par l'outil (24) et, à un endroit défini, transmet une information d'actionnement au capteur (56), qui a pour effet le changement de position du poinçon (54).

10. Dispositif selon la revendication 1, caractérisé en ce que le dispositif de mesure (13), le dispositif de fermeture (25) et le dispositif pour l'arrêt des éléments de fermeture (26) assemblés sont regroupés dans une unité de construction.

11. Disposiitf selon la revendication 1, caractérisé en ce que le dispositif de mesure (13), le dispositif de fermeture (25) et le dispositif pour l'arrêt des éléments de fermeture (26) assemblés sont regroupés dans un module électrique.

12. Dispositif selon la revendication 1, caractérisé en ce que le dispositif de mesure (13), le dispositif de fermeture (25) et le dispositif pour l'arrêt des éléments de fermeture (26) assemblés sont regroupés dans un module électrique, le dispositif de mesure (13), le dispositif de fermeture (25) et le dispositif destiné à arrêter les éléments de fermeture (26) assemblés étant connectés à un dispositif de commande électrique (59).

13. Dispositif selon la revendication 1, caractérisé en ce que le calculateur (30) fait partie du dispositif de commande (59), calculateur par le biais du programme de commande stocké en mémoire duquel le dispositif (29) destiné à l'arrêt des éléments de fermeture (26) assemblés peut être commandé en fonction d'une distance parcourue par l'outil (24).

14. Dispositif selon la revendication 1, caractérisé en ce que l'outil (24) est équipé d'un dispositif pour la saisie de différentes données relatives à un jeu de câbles (61), dispositf relié à un dispositif d'alimentation en courant (18).

15. Dispositif selon la revendication 1, caractérisé en ce que l'outil (24) est doté d'un dispositif d'indication sonore et/ou optique, ou d'un affichage (17).

16. Dispositif selon l'une ou plusieurs des revendications ci-avant, caractérisé en ce que l'outil (24) présente un dispositif de déblocage activable par le capteur (56) et qui défait les éléments de fermeture (29) lorsque une nouvelle dérivation (106) doit être insérée dans un jeu de câble fini (61) ou doit être raccordée à la dérivation de câble principale (110).

17. Dispositif selon la revendication 2, caractérisé en ce que l'outil (24) est équipé de différents dispositifs pour l'arrêt des agrafes (62).

18. Dispositif selon la revendication 5, caractérisé en ce que les deux extrémités opposées de l'enclume (10) peuvent présenter une courbure.

19. Dispositif selon la revendication 5, caractérisé en ce que la courbure est déterminée par le rayon = R qui est inférieur de moitié à l'épaisseur = D de l'enclume (10).

20. Dispositif selon la revendication 5, caractérisé en ce que le rayon R présente une dimension comprise entre 1 et 50 mm.

21. Enveloppe réalisée avec le dispositif selon la revendication 1, caractérisée en ce que l'enveloppe ou la gaine de câble (23) fabriquée avec ce dispositif, présente, en tant qu'éléments de fermeture (26) une fermeture à glissière (57) avec des dents qui s'engrènent ou des éléments emboîtables en languettes et rainures (114, 115), ou bien des éléments de jointure pouvant être appliqués les uns contre les autres par collage ou par soudage.

22. Enveloppe réalisée avec le dispositif selon la revendication 1, caractérisée en ce que la clavette (115) constitue un fermoir qui s'emboîte dans la rainure (114).

23. Enveloppe réalisée avec le dispositif selon la revendication 1, caractérisée en ce que les éléments de jointure opposés de l'élément de fermeture (26) peuvent être reliés l'un à l'autre par une colle.

24. Enveloppe réalisée avec le dispositif selon la revendication 1, caractérisée en ce que les éléments de jointure opposés de l'élément de fermeture (26) peuvent être reliés par voie thermique.

25. Enveloppe réalisée avec le dispositif selon la revendication 1, caractérisée en ce que les éléments de jointure opposés présentent des surfaces pouvant être mises à plat et sur lesquelles la colle peut être appliquée.

26. Enveloppe réalisée avec le dispositif selon la revendication 1, caractérisée en ce que les éléments de jointure (26) subissent sur leurs surfaces opposées un traitement tel qu'elles soient rendues fermement solidaires.

27. Enveloppe réalisée avec le dispositif selon la revendication 1, caractérisée en ce que l'enveloppe (23) présente des éléments extensibles (122) pour la modification de sa section.

28. Procédé pour la fermeture d'enveloppes, telles que des gaines de câbles (23), des conduits de tuyaux flexibles ou des éléments de contenants, convenant à un dispositif selon la revendication 1, caractérisé en ce que, au moyen de l'outil (24), les éléments de fermeture (26) sont d'abord assemblés et rendus fermement solidaires au moyen d'un dispositif (29) destiné à arrêter les éléments de fermeture (26) assemblés, un, deux ou plusieurs éléments de fermeture (26) pouvant être mis en place dans la gaine de câble dans la zone du point de ramification (101).

29. Procédé pour la fermeture d'enveloppes, telles que des gaines de câbles (23), des conduits de tuyaux flexibles ou des éléments de contenants, convenant à un dispositif selon la revendication 1, caractérisé en ce que sont stockées dans une banque de données (30) différentes cotes relatives à des configurations de câbles (60) et à diverses ramifications (105 à 109) ou à des faisceaux séparés (110 à 103) et/ou les distances entre deux points de jonction de configurations de câbles (60), données qui sont mises à disposition du dispositif de commande (59) de l'outil (24).

30. Procédé convenant pour un dispositif selon l'une des revendications 1 ou 15, caractérisé par les étapes de process suivantes:
a) entrée dans la banque de données (30) du numéro de la clé d'un type de véhicule défini conformément aux desiderata du client,
b) choix du jeu de câbles (61) conformément au type de véhicule et aux desiderata du client (32),
c) détermination de l'ordre chronologique des véhicules à monter (34) dans un ordre défini de 1 à n,
d) assemblage de la fermeture à glissière au moyen de l'outil (24),
e) détermination de la distance entre deux points de ramification (100 et 101) du jeu de câbles (61),
f) arrêt des éléments de fermeture (26) de la fermeture à glissière (57) au moyen du dispositif (29).

31. Procédé convenant à un dispositif selon l'une des revendications 1 ou 15, caractérisé par les étapes de process suivantes:
a) entrée dans la banque de données (30) du numéro de la clé d'un type de véhicule défini conformément aux desiderata du client,
b) choix du faisceau de câbles (61) conformément au type de véhicule et au desiderata du client (32),
c) détermination de l'ordre chronologique des voitures à monter (34) dans un ordre déterminé de 1 à n,
d) établissement d'un schéma (35) du jeu de câbles (61) et reproduction sur un affichage (38),
e) assemblage de la fermeture à glissière à l'aide du dispositif (24),
f) détermination de la distance entre deux points de ramification (100 et 101) du jeu de câbles (61),
g) arrêt des éléments de fermeture (26) de la fermeture à glissière (57) à l'aide du dispositif (29).

32. Procédé convenant à un dispositif selon l'une des revendications 1 ou 15, caractérisé en ce que les informations stockées dans la banque de données (30) concernant un jeu de câbles (61) pour un type de véhicule défini peuvent être traitées en mode graphique et visualisées sur écran et/ou être éditées sous forme de dessin.

33. Procédé convenant à un dispositif selon l'une des revendications 1 ou 15, caractérisé en ce que les informations stockées dans la banque de données (30) concernant un jeu de câbles (61) peuvent être traitées en mode graphique (31) et mises à disposition pour la planification de la production (34) après entrée d'un numéro d'identification défini d'un type de véhicule et détermination des écarts entre deux points de ramification.

34. Procédé convenant à un dispositif selon l'une des revendications 1 ou 15, caractérisé en ce que les éléments de fermeture assemblés par l'outil (24) sont arrêtés dans la zone d'un point de ramification (101) en amont et /ou en aval d'un point de ramification et/ou dans la zone d'un élément de fermeture, par un élément de fixation ou une agrafe (62) implanté au moyen du dispositif (29) entre deux éléments de fermeture (26) opposés.
